# EUROPEAN PATENT APPLICATION

(11) **EP 4 625 010 A1**
(43) Date of publication of application: **01.10.2025**
(21) Application number: 25150937.8
(22) Date of filing: 09.01.2025
(51) Int. Cl.: G02B 6/12, G02B 6/122, G02B 6/30

(54) **SECOND ORDER MODE WAVEGUIDE COUPLING**

(30) Priority: 26.03.2024 US 202418616829
(71) Applicant: Honeywell International Inc., Charlotte, NC 28202 (US)
(72) Inventor: PUCKETT, Matthew Wade, Charlotte, 28202 (US); FERTIG, Chad, Charlotte, 28202 (US); SALMAN, Jad, Charlotte, 28202 (US); HORSTMAN, Luke, Charlotte, 28202 (US); JIANG, Wei Charles, Charlotte, 28202 (US)
(74) Representative: Haseltine Lake Kempner LLP

(57) **Abstract**

A waveguide coupler that includes a base portion, a higher-order portion, and a tapered portion is provided. The base portion has a first width. The higher-order portion has a second width that is less than the first width of the base portion. The second width of the higher-order portion is selected so that higher-order mode energy is deconfined to allow for the receiving and passing of the higher-order mode energy. The tapered portion is positioned between the base portion and the higher-order portion. The tapered portion transitions between the first width of the base portion to the second width of the higher-order portion.

## Description

This invention was made with Government support. The Government has certain rights in the invention.

### BACKGROUND

Integrated photonics chips generally use light to process and transmit information. They have benefits over traditional electrical components such as greater efficiency and compactness in providing functions. Waveguides are used in integrated photonics chips to guide light from one point to another. Waveguides typically include a core and cladding. Light travels in the core which is typically made from a material with a high refractive index. The cladding, with a lower refractive index, surrounds the core. Internal reflection of the light off of the cladding ensures the light propagates along the guide without substantial loss. The design and geometry of waveguides vary based on the requirements of a specific application. Further, the size of a waveguide has an impact on the wave propagation, which is defined by a waveguide's mode. In a single-mode waveguide, the waveguide has a dimension that roughly matches the wavelength of the light passing through the waveguide. This allows for only one light path or mode. A multi-mode waveguide, in contrast, has a dimension that is greater than the wavelength of the light passing through the waveguide. Multi-mode waveguides support multiple light paths.

Coupling light into integrated photonics waveguides that are comprised of materials having high refractive index values can be particularly challenging because the optical modes supported by the waveguides exhibit high degrees of optical confinement. For example, thin film lithium niobate waveguides, which are particularly useful for modulation and wave mixing, typically exhibit per facet losses due to mode mismatch between fiber and waveguide on the order of 10 dB or more. Such losses can be too high to accommodate many applications, preventing the advantages of the integrated photonics platform from being accessed.

For the reasons stated above and for other reasons stated below which will become apparent to those skilled in the art upon reading and understanding the present specification, there is a need in the art for an effective and efficient waveguide coupler.

### SUMMARY

The following summary is made by way of example and not by way of limitation. It is merely provided to aid the reader in understanding some of the aspects of the subject matter described. Embodiments provide a waveguide coupler configured to couple higher-order mode energy.

In one embodiment, a waveguide coupler that includes a base portion, a higher-order portion, and a tapered portion is provided. The base portion has a first width. The higher-order portion has a second width that is less than the first width of the base portion. The second width of the higher-order portion is selected so that higher-order mode energy is deconfined to allow for the receiving and passing of the higher-order mode energy. The tapered portion is positioned between the base portion and the higher-order portion. The tapered portion transitions between the first width of the base portion to the second width of the higher-order portion.

In another embodiment, a waveguide coupling system including an integrated photonics chip and a waveguide coupler is provided. The waveguide coupler is in optical communication with the integrated photonics chip. The waveguide coupler includes a base portion, a higher-order portion and a tapered portion. The base portion has a first width. The higher-order portion has a second width that is less than the first width of the base portion. The second width of the higher-order portion is set so that higher-order mode energy is deconfined to allow for receiving and passing of the higher-order mode energy. The tapered portion is positioned between the base portion and the higher-order portion. The tapered portion transitions between the first width of the base portion to the second width of the higher-order portion.

In still another embodiment, a method of forming a waveguide coupler is provided. The method includes forming the waveguide coupler on an integrated photonics chip. The formed waveguide coupler includes a base, a higher-order portion, and a tapered portion. The base portion has a first width. The higher-order portion has a second width that is less than the first width of the base portion. The second width of the higher-order portion is set so that higher-order mode energy is deconfined to allow for receiving and passing of the higher-order mode energy. The tapered portion is positioned between the base portion and the higher-order portion. The tapered portion transitions between the first width of the base portion to the second width of the higher-order portion. The method further includes positioning a light passing medium to pass and receive higher-order mode energy with the higher-order portion of the waveguide coupler.

### BRIEF DESCRIPTION OF THE DRAWINGS

The present invention can be more easily understood and further advantages and uses thereof will be more readily apparent, when considered in view of the detailed description and the following figures in which:
Figure 1 is a side perspective view of a waveguide coupler according to an example aspect of the present invention;
Figure 2 is a side perspective view of an integrated photonics chip including a waveguide coupler according to an example aspect of the present invention;
Figure 3 illustrates a coupling efficiency verses waveguide width for a higher-order mode according to an example aspect of the present invention;
Figure 4 illustrates a side view of a waveguide coupling system according to an example aspect of the present invention;
Figure 5A illustrates a second-order mode profile in a simulated second-order mode graph;
Figure 5B illustrates a fundamental mode profile in a simulated fundamental mode graph; and
Figure 6 illustrates a waveguide formation flow diagram according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments address the problem of effectively getting light into and out of an integrated photonics chip with a waveguide coupler having a tapered portion. Further, the waveguide coupler includes a higher-order portion that interfaces higher-order mode energy, such as second-order mode energy, into and out of the integrated photonics chip. The coupled higher-order mode energy may include either higher-order transverse electric mode energy or a higher-order magnetic mode energy. Coupling at a higher-order mode may be desired because a higher order mode is capable of exhibiting phase matching in a non-linear material such as lithium niobate. Phase matching allows for light to either be doubled in frequency or halved in frequency which has many applications. For example, in using phase matching for down conversion, two photons are created with half the frequency, or twice the wavelength. Both second-harmonic generation and down conversion require the use of material possessing a nonzero second-order nonlinear coefficient such as lithium niobate.

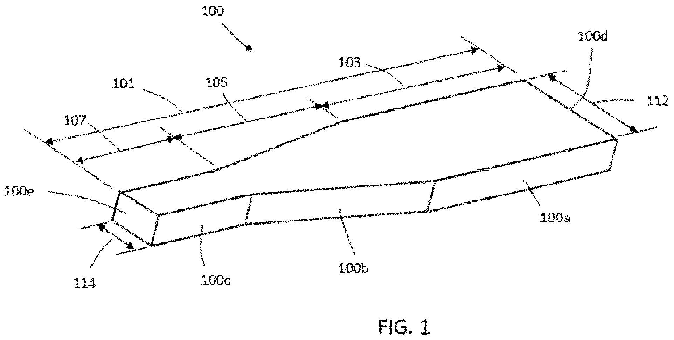

Referring to Figure 1, an example embodiment of a waveguide coupler 100 with a tapered portion is illustrated. The waveguide coupler 100, in this example, has a waveguide length 101 that extends from a first end 100d to a second end 100e. The waveguide coupler 100 includes a first portion or base portion 100a that has a base width (first width 112) and a base portion length 103. The base portion 100a is generally rectangular in shape. The waveguide coupler 100 further includes a second portion or higher-order portion 100c that has a second or higher-order width (second width 114) and a higher-order portion length 107. The higher-order portion 100c is also generally rectangular in shape. The second width 114 of higher-order portion 100c is less than first width 112 of base portion 100a. The waveguide coupler 100 also includes a third portion or tapered portion 100b that has a tapered portion length 105 that extends between the base portion 100a and the higher-order portion 100c. The tapered portion 100b transitions the width of the waveguide coupler 100 between the base width 112 and the higher-order width 114. The higher-order width 114 of the higher-order portion 100c is set or selected to be slightly above a cutoff width for higher-order mode energy so higher-order mode energy is effectively passed into and out of the waveguide coupler as discussed further below. The waveguide coupler 100 may be referred to as a waveguide coupler with an inverse taper which describes going from the second width of the higher-order portion, that receives energy from a light passing medium in a high-order mode, to the first width of the base portion 100a via the tapered portion 100b.

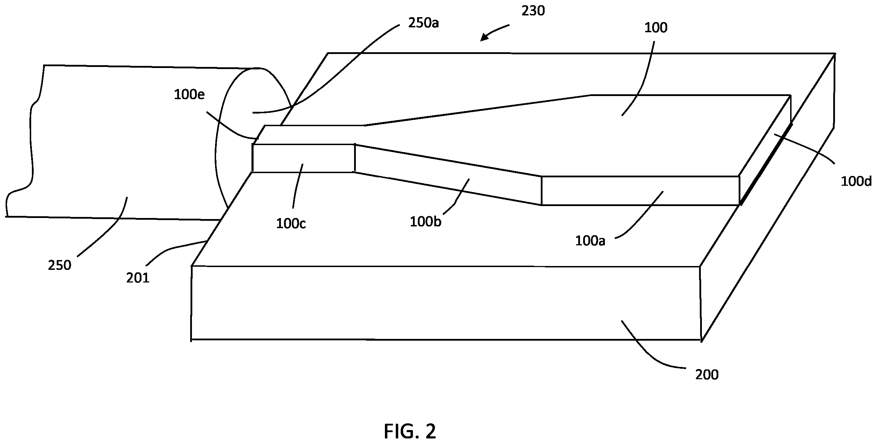

An example illustration of the waveguide coupler 100 being used to couple higher-order mode energy into and out of an integrated photonics chip 200 is illustrated in waveguide coupling system 230 of Figure 2. A light passing medium, which in this example is an optic fiber 250, is used to bring light into or transport light out of the integrated photonics chip 200 via the waveguide coupler 100. In another example, the light passing medium may be a lens, or lens system that is used to direct light into and out of the integrated photonics chip 200 via the waveguide coupler 100. As illustrated in Figure 2, a fiber end 250a of the optical fiber 250 is positioned against the second end 100e of the waveguide coupler 100 in the optic fiber example shown so that an optical communication between the optical fiber 250 and the waveguide coupler 100 occurs to receive and pass of higher-order mode energy. In one example, the waveguide coupler 100 is formed on the integrated photonics chip 200 providing optical communication between the light passing medium and the integrated photonics chip 200 to pass higher-order mode energy.

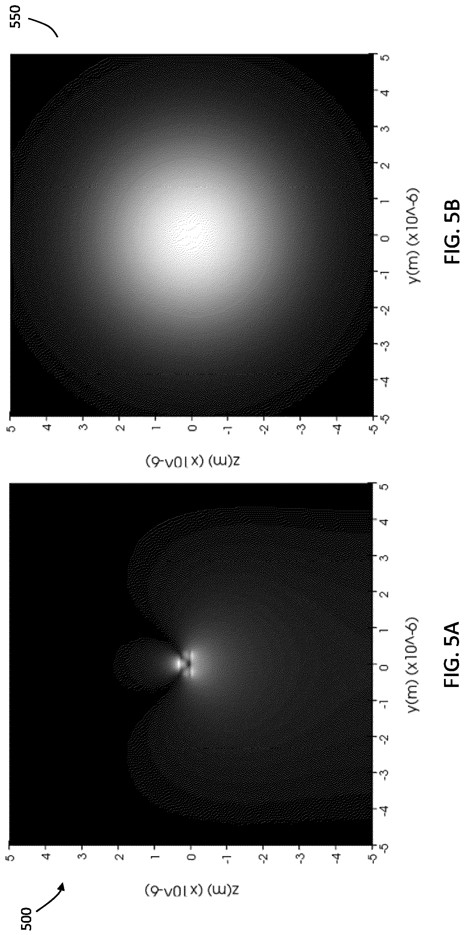

As a transverse light wave propagates in its direction of travel, electric and magnetic field energy extend at right angles to the direction of travel. The propagation of the waves can be either in a transverse electric (TE) mode or transverse magnetic (TM) mode. The higher-order mode being coupled into, in an example, may be the second-order mode (TE₂ mode). Using this naming convention, a zeroth-order mode would be the fundamental-order mode which would have one lobe, a first-order mode, which is a higher-order mode, would have two lobes and a the second-order mode has three lobes. Examples of the second-order mode and the fundamental mode are illustrated and described in the graphs of Figure 5A and 5B discussed below.

At edge 201 of the integrated photonics chip 200, the higher-order width 114 of the higher-order portion 100c of the waveguide coupler 100 is set to just above a cutoff width for higher-order mode energy to allow for efficient passing of the higher-order mode energy in embodiments. This expands the higher-order mode profile, allowing for better mode overlap with the input fiber 250. This is particularly valuable in waveguide platforms where the fundamental-order mode cannot be deconfined. The higher-order mode can be efficiently excited and converted into the fundamental mode on-chip with an on-chip converter if needed as discussed below.

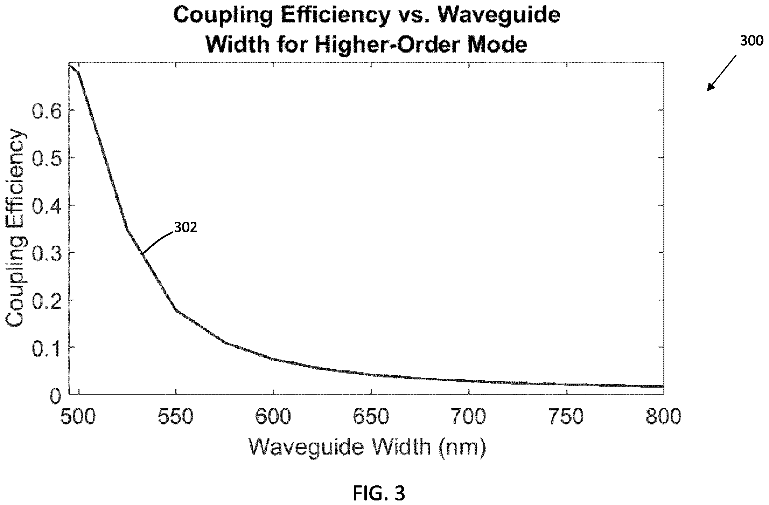

Figure 3 illustrates a higher-order mode graph 300 that shows the coupling efficiency verses waveguide width 302 in an example. In the higher-order mode graph 300, a lithium niobate waveguide is modeled at a wavelength of 800 nm. As illustrated, the coupling efficiency is as high as 70 percent at a waveguide width of around 500 nm for a higher-order mode. For comparison, coupling into the fundamental mode of the waveguide would be limited to around 7.7 percent, and this is only possible if the top width of a waveguide was reduced to 50 nm, which is extremely challenging. For an integrated photonic chip operating with fiber input and output, the insertion loss can be reduced by nearly 20 dB by coupling with the higher-order mode.

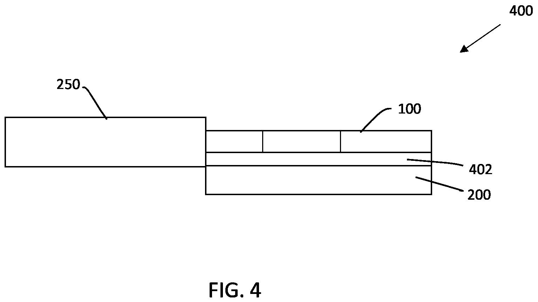

In many cases a higher-order mode can be used for all of the on-chip routing, but if this not the case, an efficient on-chip mode converter can convert the mode from the higher order mode to the fundamental mode after input coupling, and back again before output coupling. An example of an on-chip mode converter 402 is illustrated in the side view of a waveguide coupling system 400 of Figure 4. The waveguide coupling system 400 includes the fiber 250 and the waveguide coupler 100 as described above. The on-chip converter 402 is designed to convert the higher-order mode to the fundamental mode after input coupling occurs by the waveguide coupler 100. The on-chip converter 402 is also configured to convert light in the fundamental mode from the integrated photonics chip 200 to the higher-order mode in coupling the light energy into the fiber 250.

Figure 5A illustrates mode profiles in a simulated second-order mode graph 500 of one example. As discussed above, the second-order mode includes three lobes of energy which are created by an electric field or magnetic field as the light propagates along its path. As discussed above, the second width 114 of the higher-order portion 100c of the waveguide coupler 100 is set to a value slightly above a cutoff width for a higher-order mode which provides deconfinement in the second-order mode. This improves the mode overlap and thus, the coupling efficiency, as light beams traversing the optical fiber are incident upon the waveguide coupler. Figure 5B in contrast illustrates the profile of a simulated fundamental-order mode graph 550. As discussed above in the fundamental-order mode, only one energy lobe is created by the electric field or magnetic field. Further as discussed above, in the waveguide platform used, the fundamental-order mode cannot be deconfined.

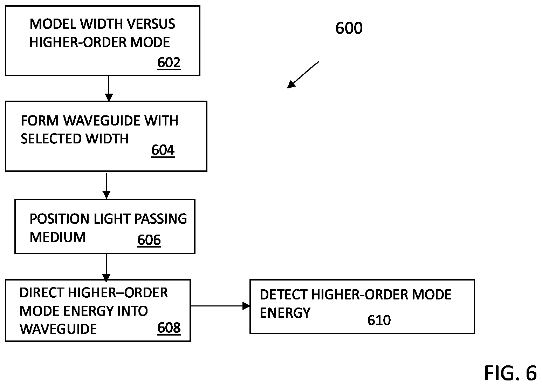

An example method of the formation of a waveguide coupler is provided to interface light beams into and out of an integrated photonics chip is illustrated in the waveguide formation flow diagram 600 of Figure 6. The waveguide formation flow diagram 600 is provided in a sequence of the blocks. The sequence of blocks may occur in a different order or in parallel in other embodiments. Hence, the present invention is not limited to the sequential sequence set out in the waveguide formation flow diagram 600 of Figure 6.

At block 602 of the example waveguide formation flow diagram 600, a model of the waveguide is performed. In an example, the width of a generally rectangular waveguide verses coupling efficiency of the second-order mode is modeled. As discussed above, embodiments operate close to a cutoff condition for the higher-order portion of the waveguide coupler. At just above the width for cutoff, the higher-order mode is very deconfined providing good coupling energy efficiency. If the width becomes too narrow, the higher-order mode is no longer supported. In general, the width selected for the high-order portion is variable depending on the degree of confinement that the waveguide provides. For example, in a low confinement waveguide, the cutoff width for the higher order mode may be four to eight times the free space wavelength while in a high confinement waveguide, the cutoff width may be closer to one times the free-space wavelength.

Based on the model, the waveguide is formed at block 604. In one example, electron-beam lithography is used to form the waveguide coupler on the integrated photonics chip. As the result of etching through the material, such a lithium niobate, a slope to a wall of the waveguide occurs so the desired rectangular shaped waveguide may have trapezoid shape areas. It may be desired to confirm the coupling efficiency of the second-order mode. Confirming the efficiency may be done in blocks 606 through block 610.

At block 606, a light passing medium, such as an optical fiber or optical lens is positioned to direct light into an end of the higher-order portion 100c of the waveguide coupler 100 so the light passing medium is in optical communication with the waveguide coupler 100. This allows for the receiving and passing of higher-order mode energy. Higher-order energy from a light beam traversing in the light passing medium is directed into the waveguide coupler 100 at block 608. The higher-order mode energy is then detected with the integrated photonics chip at block 610 in this example to determine the efficiency of the waveguide.

### EXAMPLE EMBODIMENTS

Example 1 is a waveguide coupler that includes a base portion, a higher-order portion, and a tapered portion. The base portion has a first width. The higher-order portion has a second width that is less than the first width of the base portion. The second width of the higher-order portion is selected so that higher-order mode energy is deconfined to allow for the receiving and passing of the higher-order mode energy. The tapered portion is positioned between the base portion and the higher-order portion. The tapered portion transitions between the first width of the base portion to the second width of the higher-order portion.

Example 2 includes the waveguide coupler of Example 1, wherein the higher-order mode energy is second-order mode energy.

Example 3 includes the waveguide coupler of any of the Examples 1-2, wherein the base portion and the higher-order portion are generally rectangular in shape.

Example 4 includes the waveguide coupler of any of the Examples 1-3, wherein the waveguide coupler is formed on an integrated photonic chip.

Example 5 includes the waveguide coupler of any of the Examples 1-4, wherein an end of the higher-order portion is configured to receive and pass the higher-order mode energy with an optical fiber.

Example 6 includes the waveguide coupler of any of the Examples 1-5, wherein the second width of the higher-order portion is slightly above a cutoff width that does not support the higher-order mode energy.

Example 7 is a waveguide coupling system including an integrated photonics chip and a waveguide coupler. The waveguide coupler is in optical communication with the integrated photonics chip. The waveguide coupler includes a base portion, a higher-order portion and a tapered portion. The base portion has a first width. The higher-order portion has a second width that is less than the first width of the base portion. The second width of the higher-order portion is set so that higher-order mode energy is deconfined to allow for receiving and passing of the higher-order mode energy. The tapered portion is positioned between the base portion and the higher-order portion. The tapered portion transitions between the first width of the base portion to the second width of the higher-order portion.

Example 8 includes the waveguide coupling system of Example 7, further including an optical fiber in optical communication with the higher-order portion.

Example 9 includes the waveguide coupling system of any of the Examples 7-8, further including an on-chip converter formed in the integrated photonics chip. The on-chip converter is in optical communication with the waveguide coupler. The on-chip converter is configured to interface between the higher-order mode energy and a fundamental-order mode energy.

Example 10 includes the waveguide coupling system of any of the Examples 7-9, wherein the higher-order mode energy is a second-order mode energy.

Example 11 includes the waveguide coupling system of any of the Examples 7-10, wherein the base portion and the higher-order portion of the waveguide coupler are generally rectangular in shape.

Example 12 includes the waveguide coupling system of any of the examples 7-11, wherein the second width of the higher-order portion is slightly above a cutoff width that does not support the higher-order mode energy.

Example 13 includes the waveguide coupling system according to any of the Examples 7-12, wherein the second width is further based on a modeling of a width verses higher-order mode.

Example 14 includes a method of forming a waveguide coupler. The method includes forming the waveguide coupler on an integrated photonics chip. The formed waveguide coupler includes a base, a higher-order portion, and a tapered portion. The base portion has a first width. The higher-order portion has a second width that is less than the first width of the base portion. The second width of the higher-order portion is set so that higher-order mode energy is deconfined to allow for receiving and passing of the higher-order mode energy. The tapered portion is positioned between the base portion and the higher-order portion. The tapered portion transitions between the first width of the base portion to the second width of the higher-order portion. The method further includes positioning a light passing medium to pass and receive higher-order mode energy with the higher-order portion of the waveguide coupler.

Example 15 includes the method of Example 14, further including modeling a waveguide width verses higher-order mode to determine the second width, the second width being set just above a cutoff condition for the higher-order mode based on the modeling of the waveguide width verse higher-order mode so that the higher-order mode energy is deconfined to allow for receiving and passing of the higher-order mode energy.

Example 16 includes the method of any of the Examples 14-15, further including directing a light beam into the waveguide coupler; and detecting the higher-order mode energy with the integrated photonics chip.

Example 17 includes the method of any of the Examples 14-16, wherein the higher-order mode energy is a second-order mode energy.

Example 18 includes the method of any of the Examples 14-17, further including interfacing the higher-order mode energy to a fundamental-order mode energy.

Example 19 includes the method of any of the Examples 14-18, further including using an on-chip converter to interface the higher-order mode energy to the fundamental-order mode energy.

Example 20 includes the method of any of the Examples 14-19, wherein the second width of the higher-order portion is slightly above a cutoff width that does not support the higher-order mode energy.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A waveguide coupler (100) comprising:
a base portion (1 10a) having a first width (112);
a higher-order portion (110c) having a second width (114) that is less than the first width (112) of the base portion (1 10a), the second width (114) of the higher-order portion (110c) being selected so that higher-order mode energy is deconfined to allow for receiving and passing of the higher-order mode energy; and
a tapered portion (110b) between the base portion and the higher-order portion, the tapered portion transitioning between the first width (112) of the base portion (1 10a) to the second width (114) of the higher-order portion (100c).

2. The waveguide coupler (100) of claim 1, wherein the higher-order mode energy is second-order mode energy.

3. The waveguide coupler (100) of claim 1, wherein the base portion (1 10a) and the higher-order portion (110c) are generally rectangular in shape.

4. The waveguide coupler (100) of claim 1, wherein the waveguide coupler (100) is formed on an integrated photonic chip (200).

5. The waveguide coupler (100) of claim 1, wherein an end (100e) of the higher-order portion (100c) is configured to receive and pass the higher-order mode energy with an optical fiber (250).

6. The waveguide coupler (100) of claim 1, wherein the second width (114) of the higher-order portion (110c) is slightly above a cutoff width that does not support the higher-order mode energy.

7. A method of forming a waveguide coupler (100), the method comprising:
forming the waveguide coupler (100) on an integrated photonics chip (200), the formed waveguide coupler (100) including,
a base portion (110a) having a first width (112),
a higher-order portion (110c) having a second width (114) that is less than the first width (112) of the base portion (100a), the second width (114) of the higher-order portion (110c) being set so that higher-order mode energy is deconfined to allow for receiving and passing of the higher-order mode energy, and
a tapered portion (110b) between the base portion (110a) and the higher-order portion (110c), the tapered portion (110b) transitioning between the first width (112) of the base portion (1 10a) to the second width (114) of the higher-order portion (110c); and
positioning a light passing medium (250) to pass and receive higher-order mode energy with the higher-order portion of the waveguide coupler (100).

8. The method of claim 7, further comprising:
modeling a waveguide width verses higher-order mode to determine the second width (114), the second width (114) being set just above a cutoff condition for the higher-order mode based on the modeling of the waveguide width verse higher-order mode so that the higher-order mode energy is deconfined to allow for receiving and passing of the higher-order mode energy.

9. The method of claim 7, further comprising:
directing a light beam into the waveguide coupler (100); and
detecting the higher-order mode energy with the integrated photonics chip (200).

10. The method of claim 7, wherein the higher-order mode energy is a second-order mode energy.
